# EUROPÄISCHE PATENTSCHRIFT

(11) **EP 0 678 125 B1**
(45) Veröffentlichungstag und Bekanntmachung des Hinweises auf die Patenterteilung: **23.04.1997**
(21) Anmeldenummer: 94930904.1
(22) Anmeldetag: 08.11.1994
(51) Int. Cl.: C25C 7/00

(54) **VORRICHTUNG UND VERFAHREN ZUR ELEKTROLYTISCHEN ABSCHEIDUNG VON METALLEN MITTELS EINES ROTIERENDEN KATHODENSYSTEMS**
DEVICE AND PROCESS FOR THE ELECTROLYTIC SEPARATION OF METALS WITH THE AID OF A ROTATING CATHODE SYSTEM
DISPOSITIF ET PROCEDE DE SEPARATION ELECTROLYTIQUE DE METAUX AU MOYEN D'UN SYSTEME DE CATHODE ROTATIVE

(30) Priorität: 08.11.1993 CH 3348/93
(43) Veröffentlichungstag der Anmeldung: 25.10.1995
(73) Patentinhaber: Ingenieurbüro und Labor für Galvanotechnik Jürgen Leudolph, CH-4704 Niederbipp (CH)
(72) Erfinder: LEUDOLPH, Jürgen, CH-4704 Niederbipp (CH); ROSELT, Frank, CH-4703 Kestenholz (CH)
(74) Vertreter: Goth, Helmut
(86) Internationale Anmeldenummer: CH9400217
(87) Internationale Veröffentlichungsnummer: WO9513408

(56) Entgegenhaltungen:
- US-A- 1 535 577
- US-A- 3 919 070

## Beschreibung

Die Erfindung betrifft eine Vorrichtung zur elektrolytischen Abscheidung von Metallen mittels eines rotierenden Kathodensystems und ein Verfahren zum Betrieb der Vorrichtung gemäss Patentanspruch 1, bzw. 10.

Zur Abscheidung von Metallen aus Lösungen sind Elektrolysevorrichtungen bekannt, bei welchen die Elektroden als Platten paketförmig angeordnet werden. Dadurch werden vielfach Kurzschlüsse beobachtet oder es treten wegen mangelhafter Kontaktierung unkontrollierte Stromdichten auf (0,1 - 1 A/dm²), wodurch sich immer wieder unterschiedliche Abscheidungen ergeben. Im weitern sind die Strömungsverhältnisse schwer kontrollierbar, was ebenfalls inhomogene Abscheidungen zur Folge hat. Um diese Nachteile zu kompensieren wird auf niedrigere Stromdichten ausgewichen, was lange Abscheidungszeiten zur Folge hat, und demnach wirtschaftlich uninteressant wird, oder es wird auf grössere Anlagen ausgewichen, was Mehrkosten auf der Anlagenseite verursacht.

Nach PS-US 5,183,544 ist eine Metallrückgewinnungsanlage bekannt, mit welcher die Metallrückgewinnung aus Filterkuchen erfolgen kann. In einer Vorbehandlung werden die metallhaltigen Filterkuchenteile in Suspension gebracht und einem Elektrolyten zugefügt, in welchem die Metalle auf einer rotierenden Kathode abgeschieden werden. Diese Kathode ist ein Nickel-, bzw. Chrombeschichtetes Aluminium. Sie muss jedesmal in einer neu vorbereiteten Form bereitgestellt werden, was nachteilig ist. Zudem muss nach erfolgter Abscheidung die Kathode aufbearbeitet werden, bevor sie wieder in den Prozess zurückgeführt werden kann.

Es ist die Aufgabe der vorliegenden Erfindung, eine Vorrichtung zur elektrolytischen Abscheidung von Metallen und ein Verfahren zu deren Betrieb anzugeben, welche ein rotierendes Kathodensystem vorsehen, welches kompakt aufgebaut und einfach handhabbar ist, die Metalle kompakt und homogen abscheidet, und welches sich demzufolge für die Metallrückgewinnung besonders eignet.

Erfindungsgemäss wird diese Aufgabe mit einer Vorrichtung gemäss dem Wortlaut des Patentanspruches 1 und einem Verfahren gemäss dem Wortlaut des Patentanspruches 10 gelöst. In den Ansprüchen 2 - 9 werden Ausführungsformen dazu beschrieben. Die Erfindung wird im Folgenden anhand der Zeichnungen näher erläutert. Es zeigen:
- Fig. 1: Prinzip des rotierenden Kathodensystems in einer Elektrolyseeinheit in schematischer Darstellung
- Fig. 2: Teil eines Trägerzylinders im Schnitt ohne Kontaktstab
- Fig. 3: Teil eines Trägerzylinders im Schnitt nach Einbringen des Kontaktstabes
- Fig. 4: Ausführungsbeispiel eines Kontaktierungsraumes
- Fig. 5: Ausführungsbeispiel einer Mantelkathode als Endlosstrumpf

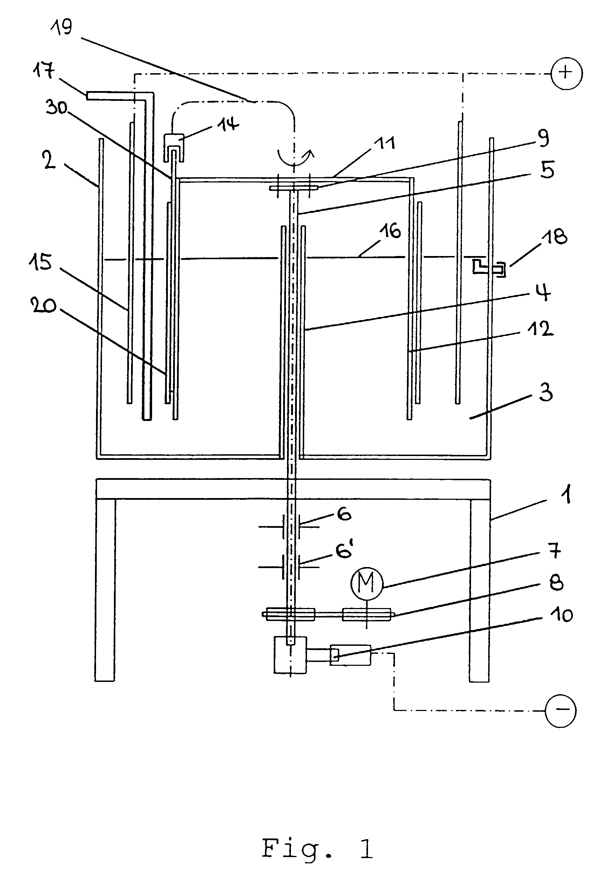

Fig. 1 zeigt das Prinzip des rotierenden Kathodensystems in einer Elektrolyseeinheit in schematischer Darstellung. Auf einem Montagerahmen 1 befindet sich ein Behälter 2, der den Elektrolyten 3 enthält und in welchem in der Behältermitte eine zylindrisches Rohr 4 eingeschweisst ist. Durch dieses Rohr wird eine Antriebswelle 5 geführt, welche in den Lagern 6 und 6' gelagert ist und über einen verstellbaren Antrieb 7 mittels eines Zahnriemens 8 angetrieben wird und an ihrem oberen Ende einen Flansch 9 aufweist. Das Rohr überragt den Pegel 16 des Elektrolyten, wodurch ein Ausfliessen des Elektrolyten verhindert wird. Über den Einlauf 17, bzw. den Überlauf 18, wird die Elektrolyseeinheit mit dem Elektrolyten beschickt, bzw. entleert. Damit eignet sich die Vorrichtung auch zur Kaskadenschaltung mehrerer solcher Einheiten. Über die Antriebswelle, welche hier beispielsweise als Hohlwelle ausgeführt ist, erfolgt die kathodenseitige Stromzuführung, wofür ein Schleifkörper 10 vorgesehen ist. Die Antriebswelle benötigt eine gewisse Festigkeit und wird - falls sie gleichzeitig als Stromzuführung dienen soll - aus einer metallischen Legierung, wie Hartbronze oder Hartkupfer gefertigt. Wird die Antriebswelle als Hohlwelle ausgelegt, so wird sie beispielsweise aus rostfreiem Stahl gefertigt, was das Korrosionsverhalten positiv beeinflusst. Die Stromzuführung 19 kann dann über einen Kupferleiter erfolgen. Am Flansch 9 ist ein Trägerzylinder 11 befestigt, sodass dessen Zylinderwände 12 in den Elektrolyten eintauchen. Auf der Aussenseite des Trägerzylinders ist eine Mantelkathode 20 befestigt, an welche über einen Kontaktstab 30 mit einer Steckbuchse 14 die Stromzuführung 19 erfolgt, wie später beschrieben wird. Die anodenseitige Stromzuführung erfolgt mit Stab- oder Plattenelektroden 15 in bekannter Weise. Als Materialien für die Mantelkathode 20 kommen Folien, Gazen, Gewebe, geflechte, Fliesse, Schaum und ähnliche mehr aus Metall oder Kunststoff in Frage.

Fig. 2 zeigt einen Teil des Trägerzylinders im Schnitt. Der Trägerzylinder 11 weist einen oder mehrere schmale Schlitze 21 auf, in welche die Mantelkathode 20 eingefügt wird, sodass deren Enden 22 und 22' um die Kanten 23 und 23' des Trägerzylinders geführt werden. Der Trägerzylinder wird vorzugweise aus Kunststoff, etwa Polypropylen, gefertigt. Er kann aber auch aus einem metallischen Werkstoff gefertigt werden, wobei er auf der Innenseite mindestens bis oberhalb des Elektrolytniveaus pulverlakkiert werden kann, um den Anforderungen der Isolation und der Korrosion gerecht zu werden. Die Schlitze 21 sind schmal, und werden dem Material der Mantelkathode 20 angepasst. Sie sind 2-5 mm weit und verlaufen im wesentlichen parallel zur Rotationsachse der Antriebswelle; sie können aber auch schräg angeordnet werden. Als Mantelkathode kommen dünne, flexible Materialien in Frage z.B. Cu-Folien mit Dicken von 15-150 µm, vorzugsweise 70 µm, oder ein 50-500 µm starkes Polypropylengewebe, oder ein elektrisch leitender Polypropylenschaum mit einer Dicke von 3-5 mm, welcher offenporig und niederohmig ist. Derartige Mantelkathodenmaterialien sind kostengünstig als Rollenmaterial verfügbar. Die zur Beschickung des Trägerzylinders abgelängten Mantelkathodenstücke werden endseitg abgekantet, dass danach die abgekanteten Enden einfach in den Schlitz eingelegt werden können. Nach dem Einführen eines Kontaktstabes - wie weiter unten beschrieben - ergibt sich auf diese Weise eine auf dem Trägerzylinder plan aufliegende Mantelkathode. Damit ist eine genau definierte Geometrie zur Anodenanordnung gegeben, was für eine homogene Abscheidung wesentlich ist. Auf die gewählten Mantelkathodenmaterialien werden nun die Schlitzbreiten derart angepasst, dass hinter dem Schlitz eine Abscheidung wirkungsvoll unterbunden werden kann. Hinter dem Schlitz 21 befindet sich ein parallel zum Schlitz laufender Kontaktierungsraum 25, der durch das Profil 24 und den Trägerzylinder 11 gebildet wird. Das Profil 24 ist an den Trägerzylinder an den Stellen 26 und 26' angebracht, vorzugsweise angeschweisst. Der Kontaktierungsraum 25 ist hier in einer quadratischen Form angedeutet und ist für die Kontaktierung vorgesehen.

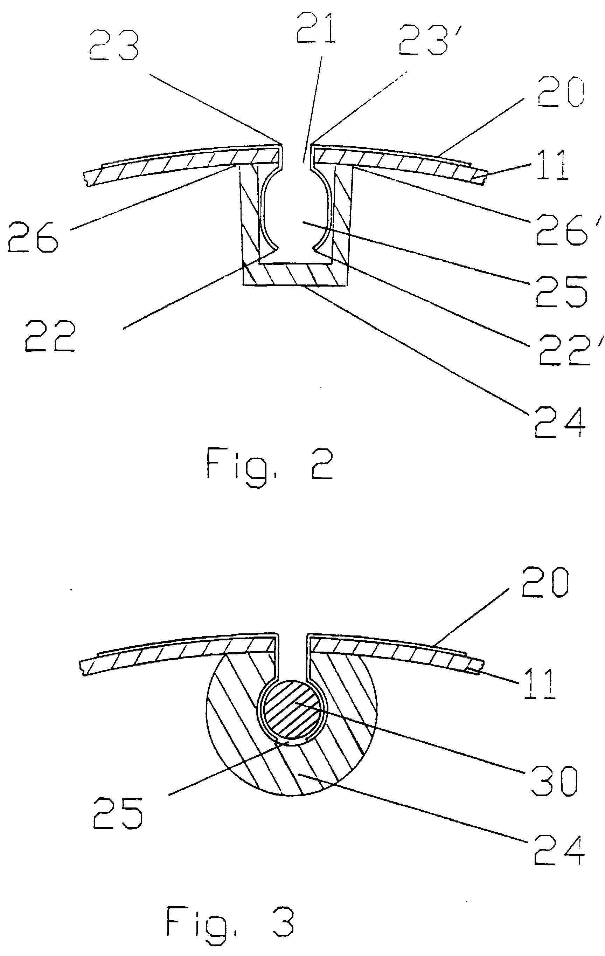

Fig. 3 zeigt einen Teil des Trägerzylinders im Schnitt nach Einbringen des Kontaktstabes. Trägerzylinder 11 und Mantelkathode 20 mit den Enden 22 und 22' entsprechen der Fig. 2. Der Kontaktierungsraum 25 ist hier im wesentlichen zylindrisch und wird durch ein Rohr 24 realisiert. Der Kontaktstab 30 bewirkt die Kontaktierung der Mantelkathode 20 für die kathodenseitige Stromzuführung. Material und Dimensionen des Kontaktstabes werden so gewählt, dass eine grossflächige Kontaktierung gewährleistet wird und gleichzeitig mit dem Kontaktstab die Fixierung der Mantelkathode auf dem Trägerzylinder erfolgen kann, ohne dass weitere Mittel zu deren Fixierung benötigt werden. Dies hat sich besonders vorteilhaft erwiesen, wobei die elektrolytspezifischen höchsten Stromdichten, vorzugsweise 1-10 A/dm², erzielt werden konnten und sich eine kompakte, mechanisch stabile Metallschicht ergab, ohne dass gestörte Abscheidungen beobachtet wurden. Der Kontaktstab 30 wurde mit einem runden Querschnitt gewählt, er kann aber auch einen davon abweichenden Querschnitt aufweisen, beispielweise einen sechs-eckigen; wesentlich ist, dass durch die Wahl von Material und Dimension, im speziellen Durchmesser und Form des Querschnittes, eine optimale Zwangskontaktierung bewirkt wird, welche auf die verwendeten Materialien der Mantelkathode abgestimmt werden. Überraschenderweise hat sich mittels Verwendung eines Kontaktstabes der beschriebenen Art eine völlig angespannte Mantelkathode - auch bei Verwendung hauchdünner Folien - ergeben, welche auf dem Trägerzylinder plan auflag. Zudem erwies sich die Handhabung dieser Befestigungsart als problemlos, einfach und rasch, was sich in guter Reproduzierbarkeit der erzielten Abscheidungen nachweisen liess.

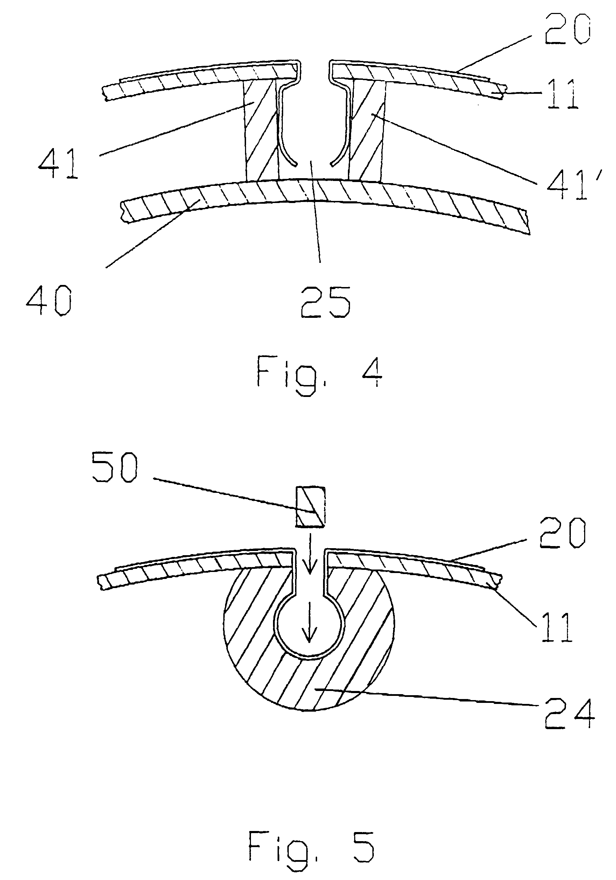

Fig. 4 zeigt ein Ausführungsbeispiel eines Kontaktierungsraumes. Hinter dem Trägerzylinder 11 befindet sich ein zweiter Zylinder 40 mit kleinerem Durchmesser als der Trägerzylinder 11. Über die Stege 41 und 41' wird der innere Zylinder 40 am Trägerzylinder 11 befestigt. Dadurch ergibt sich ein in etwa quadratischer oder rechteckiger Kontaktierungsraum 25, in welchem die Kontaktierung der Mantelkathode 20 mit einem quadratischen oder rechteckigen Kontaktstab grossflächig erfolgen kann.

Fig. 5 zeigt ein Ausführungsbeispiel einer Mantelkathode als Endlosstrumpf. Der Kontaktierungsraum 25 wurde hier wieder mit einem Rohr 24 ausgeführt. Als Mantelkathode 20 wurde ein schlauchförmiges, netzartiges Material verwendet, welches als Endlosschlauch verfügbar ist, und der Anwendung entsprechend abgelängt wird. Das abgelängte Schlauchstück wird über den Trägerzylinder 11 gestülpt und mit einer Hilfsplatte 50 in Pfeilrichtung in den Schlitz gestossen, sodass nach dem Entfernen der Hilfsplatte die Kontaktierung mit dem Kontaktstab einfach und sicher erfolgen kann. Bei diesem Ausführungsbeispiel werden vorzugsweise Trägerzylinder mit diametral gegenüberliegenden Schlitzen verwendet, wodurch sich einwandfreie Kontaktierung und garantiert plane Oberflächen der Mantelkathode ergeben. Durch die Verwendung eines zweiten Schlitzes ergibt sich auf diese Weise eine Verdoppelung der Kontaktierungsfläche, was vielfach erwünscht ist.

Beispiel 1 beschreibt eine Elektrolyse einer Lösung aus einem Cu-haltigen Standspülbad, welches einem Cu-Elektrolyten mit 60 g/l Kupfer nachgeschaltet war. Als Mantelkathode wurde eine 70 µm Cu-Folie verwendet mit den Massen 0,25 m x 0,438 m und einer Kathodenfläche von 0,344 m². Das Kathodensystem rotierte mit 16 U/min. Die Stromdichte lag bei 1 A/dm². Das Chargenvolumen betrug 100 1 bei einer Anfangskonzentration von 4 g/l. Die Endkonzentration lag bei 1,2 mg/l nach 15,3 h, woraus sich ein Wirkungsgrad von 64% ergab.

Beispiel 2 beschreibt eine Elektrolyse einer Lösung aus einem Ag-haltigen, cyanidischen Standspülbad, welches einem cyanidischen Ag-Elektrolyten nachgeschaltet war. Als Mantelkathode wurde ebenfalls eine 70 µm Cu-Folie verwendet mit den Massen 0,25 m x 0,438 m und einer Kathodenfläche von 0,344 m². Das Kathodensystem rotierte mit 16 U/min. Die Stromdichte lag bei 1 A/dm². Das Chargenvolumen betrug 100 l bei einer Anfangskonzentration von 1,74 g/l. Die Endkonzentration lag bei 1,5 mg/l nach 13,8 h, woraus sich ein Wirkungsgrad von 9,1% ergab.

Beispiel 3 beschreibt eine Elektrolyse einer Lösung aus einem Ag-haltigen, cyanidischen Standspülbad, welches einem cyanidischen Ag-Elektrolyten nachgeschaltet war. Als Mantelkathode wurde wieder eine 70 µm Cu-Folie verwendet mit einer Kathodenfläche von 7 dm². Das Kathodensystem rotierte mit 16 U/min. Das Chargenvolumen betrug 30 1 bei einer Anfangskonzentration von 1,74 g/l. Die Endkonzentration lag bei 1 mg/l nach 49 h, woraus sich ein Wirkungsgrad von 7% ergab.

Beispiel 4 beschreibt eine Elektrolyse einer Lösung aus einem Cu-haltigen Bad, welches einem CuSO₄-Elektrolyten mit 14 g/l Kupfer enthielt. Die Mantelkathode hatte eine Kathodenfläche von 35 dm² bei einer Drehzahl von 30 U/min. Badvolumen 120 1. Die Stromdichte lag bei 1,5 A/dm² bei einem Zellenstrom von 52 A. Die Anfangskonzentration betrug von 14 g/l, die Endkonzentration war nach 28,5 h kleiner als 0,1 mg/l, woraus sich ein Wirkungsgrad von 95,7% ergab.

Beispiel 5 beschreibt eine Elektrolyse einer Lösung aus einem Au-haltigen Bad, welches eine Anfangskonzentration von 400 mg/l Gold aufwies. Die Mantelkathode hatte eine Kathodenfläche von 7,3 dm² bei einer Drehzahl von 12 U/min. Badvolumen 30 1 bei einem pH-Wert von 4,5. Die Stromdichte lag bei etwa 0,1 A/dm² bei einem Zellenstrom von 0,73 A. Die Anoden waren Titan-platiniert. Der Elektrolytstrahl wurde auf die Kathode gerichtet, was eine Zusatzbewegung des Elektrolyten bewirkte. Die Endkonzentration lag nach 16 h bei 1 mg/l, woraus sich ein Wirkungsgrad von 13,9% ergab. Gesamthaft wurden bei dieser Au-Abscheidung 12 g Au abgeschieden, was 1,02 g/Ah entsprach.

Vorrichtung und Verfahren der beschriebenen Art finden Anwendung zur Entsorgung von Metallen aus metallhaltigen, hinreichend elektrischleitenden Lösungen. Aber auch zur Abreicherung von derartigen Lösungen mit dem Ziel, sie nach einer bestimmten Zeit elektrolytischer Behandlung in den Arbeitsprozess zurückzuführen. Dies ist beispielsweise von Interesse bei Ätzbädern, Beizbädern und Elektrolyten jeglicher Art, die sich während des Arbeitsprozesses verandern, was zu unerwünschten Metallkonzentrationen führen kann.

Erfindungswesentlich ist, dass die erfindungsgemässe Lösung der Aufgabe sich auszeichnet durch eine einfache Handhabung des Trägerzylinders mit Mantelkathode, insbesondere bezüglich des Entfernens der elektrolytischen Abscheidung von der Mantelkathode, und durch die Wahl des Mantelkathodenmaterials, da diese auf die jeweilige elektrolytische Abscheidung optimal angepasst werden kann.

## Patentansprüche

1. Vorrichtung zur elektrolytischen Abscheidung von Metallen in einer Metallrückgewinnungszelle, wobei die Metallrückgewinnungszelle aus einem Behälter, einem Elektrolyten, einer Anodenanordnung, einem rotierenden Kathodensystem, Mittel zu dessen gesteuertem Antrieb, sowie aus Mitteln zur Stromzuführung besteht, gekennzeichnet dadurch, dass in der Metallrückgewinnungszelle das rotierende Kathodensystem aus einem Trägerzylinder (11) mit mindestens einem Schlitz (21) und mit mindestens einem dahinter liegenden Kontaktierungsraum (25), aus mindestens einer Mantelkathode (20), aus Mitteln zur Kontaktierung der Mantel kathode im Kontaktierungsraum und einer Antriebswelle (5) mit Mitteln zur Stromzuführung besteht.

2. Vorrichtung nach Anspruch 1, dadurch gekennzeichnet, dass der Trägerzylinder (11) aus Kunststoff oder aus Metall besteht.

3. Vorrichtung nach den Ansprüchen 1 bis 2, dadurch gekennzeichnet, dass die Schlitze (21) im wesentlichen parallel zur Rotationsachse verlaufen.

4. Vorrichtung nach den Ansprüchen 1 bis 3, dadurch gekennzeichnet, dass der parallel zum Schlitz (21) angebrachte Kontaktierungsraum (25) durch ein angebrachtes Rohr (24) gebildet wird.

5. Vorrichtung nach den Ansprüchen 1 bis 3, dadurch gekennzeichnet, dass der parallel zum Schlitz (21) angebrachte Kontaktierungsraum (25) durch einen zum Trägerzylinder (11) konzentrischen zweiten und kleineren Zylinder (40) ausgebildet ist, wobei dieser mittels Stegen (41,41') am Trägerzylinder befestigt wird, sodass dadurch der Kontaktierungsraum begrenzt wird.

6. Vorrichtung nach den Ansprüchen 1 bis 5, dadurch gekennzeichnet, dass zur Kontaktierung im Kontaktierungsraum (25) ein Kontaktstab (30) vorgesehen wird.

7. Vorrichtung nach den Ansprüchen 1 bis 6, dadurch gekennzeichnet, dass der Kontaktstab (30) einen runden oder eckigen, vorzugsweise 6-eckigen, Querschnitt aufweist, welcher sich mindestens im unteren Teil verjüngt.

8. Vorrichtung nach den Ansprüchen 1 bis 7, dadurch gekennzeichnet, dass die Antriebswelle (5) eine Hohlwelle ist, in deren Hohlraum ein elektrischer Leiter (19) für die Stromzuführung vorgesehen ist.

9. Vorrichtung nach den Ansprüchen 1 bis 7, dadurch gekennzeichnet, dass die Antriebswelle (5) gleichzeitig als elektrischer Leiter (19) für die Stromzuführung vorgesehen ist, und aus einer metallischen Legierung, vorzugsweise aus Hartbronze oder Hartkupfer, besteht.

10. Verfahren zum Betrieb der Vorrichtung nach Anspruch 1, dadurch gekennzeichnet, dass die Mantelkathode (20) auf den Trägerzylinder (11) aufgebracht wird, dass sie mittels eines Kontaktstabes (30) im Kontaktierungsraum grossflächig kontaktiert und gleichzeitig plan fixiert wird, dass der beschickte Trägerzylinder einfach auf dem Flansch (9) montiert wird und dass die Stromzuführung (19) an den Kontaktstab über die Antriebswelle (5) erfolgt.

11. Anwendung des Verfahren nach Anspruch 10 zur Entsorgung von Metallen aus metallhaltigen, hinreichend elektrisch leitenden Lösungen.

12. Anwendung des Verfahren nach Anspruch 10 zur Abreicherung von Metallen aus metallhaltigen, hinreichend elektrischleitenden Lösungen zu deren Rückführung in den Arbeitsprozess.

## Claims

1. Device for the electrolytic separation/deposition of metals in a metal recovery cell, where the metal recovery cell consists of a vessel, an electrolyte, an anode arrangement, a rotating cathode system, means for its controlled drive, and of means for current feed, characterized by that the rotating cathode system in the metal recovery cell consists of a support cylinder (11) with at least one slot (21) and with at least one contact chamber (25) situated behind it, of at least one mantle cathode (20), of means for effecting contact, and a drive shaft (5) with means for current supply.

2. Device according to claim 1, characterized by that the support cylinder (11) is made of plastic or of metal.

3. Device according to claim 1 to 2, characterized by that the slots (21) extent essentially parallel to the axis of rotation.

4. Device according to claims 1 to 3, characterized by that the contact chamber (25) installed parallel to slot (21) is formed by an installed pipe (24).

5. Device according to claims 1 to 3, characterized by that the contact chamber (25) extending essentially parallel to slot (21) is formed by a second and smaller cylinder (40) that is concentric to the support cylinder (11), where the cylinder (40) is fastened to the support cylinder by bridges (41, 41') so that the contact chamber is confined.

6. Device according to claims 1 to 5, characterized by that for achieving contact in the contact chamber (25) a contact rod (30) is provided.

7. Device according to claims 1 to 6, characterized by that the contact rod (30) has a circular or polygonal, preferably a 6-sided cross section that at least in the lower part is tapered.

8. Device according to claims 1 to 7, characterized by that the drive shaft (5) is a hollow shaft, in the void of which an electrical conductor (19) is provided for the current supply.

9. Device according to claims 1 to 7, characterized by that the drive shaft (5) is simultaneously provided as electrical conductor (19) for the current supply and consists of a metal alloy, preferably of hard bronze or hard copper.

10. Process for the operation of the device according to claim 1, characterized by that the mantle cathode is put onto the support cylinder (11), is by means of contact rod (30) making contact over a large surface area in the contact chamber and simultaneously is fastened in a flat plane, by that the loaded support cylinder is mounted in a simple manner on the flange (9), and the current supply (19) occurs to the contact rod through the drive shaft (5).

11. Application of the process according to claim 10 for the removal of metal from metal-containing, sufficiently electrically conducting solutions.

12. Application of the process according to claim 10 for the depletion of metals from metal-containing, sufficiently electrically conducting solutions, for the purpose of recycling them back to the work process.

## Revendications

1. Dispositif conçu pour la précipitation électrolytique de métaux dans une cellule de récupération du métal, cette cellule de récupération du métal consistant en un récipient, un électrolyte, un dispositif à anodes, un système à cathode rotative, un dispositif d'entraînement asservi à ce système, ainsi que des moyens d'alimentation en courant, et caractérisé en ce que dans la cellule de récupération du métal, le système à cathode rotative consiste en un cylindre porteur (11) présentant au moins une fente (21) et au moins un espace de bonding (25) placé à l'arrière, en au moins une cathode à enveloppe (20), en dispositifs de bonding de la cathode à enveloppe placée dans l'espace de bonding, et en un arbre d'entraînement (5) équipé de moyens d'alimentation en courant.

2. Dispositif selon la revendication 1, caractérisé en ce que le cylindre porteur (11) est en matière plastique ou de métal.

3. Dispositif selon les revendications 1 à 2, caractérisé en ce que les fentes (21) courent grosso modo parallèlement à l'axe de rotation.

4. Dispositif selon les revendications 1 à 3, caractérisé en ce que l'espace de bonding (25) placé parallèlement à la fente (21) est constitué par un tube (24) rapporté.

5. Dispositif selon les revendications 1 à 3, caractérisé en ce que l'espace de bonding (25) placé parallèlement à la fente (21) est formé d'un second cylindre (40) plus petit et concentrique au cylindre porteur (11), ledit second cylindre étant fixé au cylindre porteur par des entretoises (41, 41'), de telle sorte que l'espace de bonding en soit limité.

6. Dispositif selon les revendications 1 à 5, caractérisé en ce que pour le bonding qui est effectué dans l'espace de bonding (25), une tige de contact (30) est prévue.

7. Dispositif selon les revendications 1 à 6, caractérisé en ce que la tige de contact (30) dispose d'une section transversale ronde ou polygonale, de préférence hexagonale, qui est effilée au moins sur sa partie inférieure.

8. Dispositif selon les revendications 1 à 7, caractérisé en ce que l'arbre d'entraînement (5) est un arbre creux, dans l'espace creux duquel est prévu un conducteur électrique (19) pour l'alimentation en courant.

9. Dispositif selon les revendications 1 à 7, caractérisé en ce que l'arbre d'entraînement (5) est conçu tout comme le conducteur électrique (19) pour l'alimentation en courant, et qu'il est dans un alliage métallique, de préférence du bronze dur ou du cuivre dur.

10. Procédé permettant de faire fonctionner le dispositif conforme à la revendication 1, caractérisé en ce que l'électrode à enveloppe (20) est placée sur le cylindre porteur (11), que le bonding est effectué par elle sur une grande surface dans l'espace de bonding au moyen d'une tige de contact (30), et qu'elle est en même temps fixée horizontalement, caractérisé en ce que le cylindre porteur chargé est simplement monté sur la bride (9), et caractérisé en ce que l'alimentation en courant (19) de la tige de contact se fait par le biais de l'arbre d'entraînement (5).

11. Application du procédé conforme à la revendication 10 à l'évacuation de métaux hors de solutions contenant des métaux et électriquement suffisamment conductrices.

12. Application du procédé conforme à la revendication 10 à l'appauvrissement de métaux à partir de solutions contenant des métaux et électriquement suffisamment conductrices, pour le recyclage de ces solutions dans le procédé de travail.
